# EUROPÄISCHE PATENTSCHRIFT

(11) **EP 3 189 908 B1**
(45) Veröffentlichungstag und Bekanntmachung des Hinweises auf die Patenterteilung: **24.04.2019**
(21) Anmeldenummer: 16000032.9
(22) Anmeldetag: 11.01.2016
(51) Int. Cl.: B21C 37/12, B21D 51/00, B65D 88/08, B65D 90/02, E04H 7/06, E04H 7/30, B21D 51/18

(54) **VORRICHTUNG ZUM HERSTELLEN EINES ZYLINDRISCHEN BEHÄLTERS MIT GROSSEM DURCHMESSER, INSBESONDERE EINES SILOS**
DEVICE FOR MAKING A CYLINDRICAL CONTAINER WITH LARGE DIAMETER, IN PARTICULAR OF A SILO
DISPOSITIF DE PRODUCTION D'UN RECIPIENT CYLINDRIQUE A GRAND DIAMETRE, EN PARTICULIER UN SILO

(43) Veröffentlichungstag der Anmeldung: 12.07.2017
(73) Patentinhaber: Lipp, Xaver, 73479 Ellwangen (DE)
(72) Erfinder: Lipp, Xaver, 73479 Ellwangen (DE)
(74) Vertreter: Clemens, Gerhard

(56) Entgegenhaltungen:
- WO-A1-2014/048515
- CN-U- 202 910 217

## Beschreibung

### TECHNISCHES GEBIET

Die vorliegende Erfindung betrifft eine Vorrichtung zum Herstellen eines zylindrischen Behälters mit großem Durchmesser, insbesondere eines Silos, aus einem auf einer Haspel aufgewickelten anschließend wendelförmig gebogenen Blechbandes mit einer auf dem Boden aufstellbaren Profiliereinrichtung mit Profilierstationen, die eine der Wandbiegung des zylindrischen Behältnisses entsprechend ausgebildete und versetzt verlaufende Bahn aufweist, der das Blechband zugeführt wird, und die Profilierstation an den oberen Randbereich des zugeführten Blechbandes einen Kragflansch und einen an den Flansch nach unten anschließenden mit einem Versatzmaß versetzt zur Blechbandebene verlaufenden Überlappungswandbereich anformt, einer auf den Boden aufstellbaren Drehantriebseinrichtung mit Drehantriebsstationen, einer Schweißeinrichtung, die unmittelbar nach oder an der Drehantriebseinrichtung zum Verschweißen eines überlappend benachbarten oberen mit einem unteren Randbereich des zugehörigen unteren und oberen Blechbandes angeordnet ist, einen auf den Boden aufstellbaren ringförmigen Montagerahmen, der in Abstand von seinem unteren Ende längs einer Schraubenlinie in Umfangsrichtung beabstandete Tragrollen an Tragstützen zur Unterstützung des Behälters an dem Kragflansch liegt, wobei die Bahn der Profiliereinrichtung neben der Bahn der durch die Tragrollen bestimmten Schraubenlinie verläuft und wobei die Anordnung der Drehantriebseinrichtung mit ihren Drehstationen und der Schweißeinrichtung mit der durch die Tragrollen bestimmten schraubenlinienförmigen Bahn übereinstimmt.

### STAND DER TECHNIK

Aus wendelförmig gebogenem Blechband hergestellte Behälter sind aus der DE 2 250 239 A oder der EP 1 181 115 B1 bekannt. Zum Herstellen von Behältern wird dabei aus einem Blechband eine Wendel mit einem dem Behälterdurchmesser entsprechenden Durchmesser geformt. Bei der Herstellung eines derartigen Behälters werden die einander zugeordneten Wendelblechbandränder zunächst ausgebogen und anschließend auf der Außenseite des Behälters mittels eines Falzes fluiddicht miteinander verbunden. Hierzu werden die einander gegenüberliegenden Längsränder des Blechbandes jeweils U-förmig ausgebogen und die einander zugeordneten U-förmig ausgebogenen Blechränder werden ineinander gelegt und anschließend durch Falzen verbunden. Dieses System ist als Lipp-Doppelfalz-System am Markt bekannt und vielfältig bewährt. Durch dieses Lipp-Doppelfalz-System ist eine einfache und schnelle Herstellung der Behälter mit variablem Durchmesser und variabler Höhe möglich. Transportable Biegeblech- und Montagevorrichtungen gewährleisten, dass der Behälter an dem jeweiligen Aufstellungsort montiert werden kann und das Transportvolumen entsprechend reduziert werden kann.

Aus der DE 199 39 180 A1 ist bekannt, einen Behälter derart herzustellen, dass ein erster Randabschnitt unter Ausbildung einer wendelförmigen verlaufenden Ausbiegekante zur Außenseite hin ausgebogen wird und ein zweiter Randabschnitt des benachbart darüber angeordneten Blechbandes nach außen abgebogen wird und dann durch einen Falz mit einem ersten Randabschnitt verbunden wird.

Für die bisherigen Anwendungen dieses Behältersystems, beispielsweise zum Lagern von Schüttgütern aus der Land- und Forstwirtschaft oder von Bioabfall, weisen die Behälter eine ausgezeichnete Stabilität, Dichtheit und Medienresistenz auf. Für weitere Anwendungen wie beispielsweise die Lagerung von fluiden Medien, wie pflanzliche Öle, Erdöl oder dergleichen ist jedoch ein deutlich größeres Behältervolumen erforderlich, bei denen die Dichtheit zuverlässig gewährleistet werden muss. Die damit einhergehende erhöhte mechanische Stabilität der Behälter kann durch die bekannten Falzsysteme nicht ausreichend gewährleistet werden. Insbesondere stößt das Falzsystem bei großen Blechdicken an seine Grenzen.

Um wendelförmig aus gebogenem Blechband hergestellte Behälter bereit zu stellen, deren Anwendungsspektrum vergrößert ist, insbesondere bezüglich der Umsetzung eines großen Speichervolumens und/oder einer erhöhten mechanischen Stabilität unter Gewährleistung einer dennoch einfachen und schnellen Herstellbarkeit beziehungsweise Montage, wurden Lösungen entwickelt, die die Falzverbindung durch eine Schweißverbindung ersetzen.

Die WO 2014/048515 A1 offenbart einen Behälter, hergestellt aus einem wendelförmig gebogenen Blechband der eingangs beschriebenen Art, wobei die Randabschnitte der höhenmäßig übereinander verlaufenden benachbarten Randbereiche des Blechbandes über eine Schweißverbindung miteinander verbunden sind. Dabei überlappen sich die Randbereiche und werden durch zwei getrennte Schweißnähte fluiddicht miteinander verbunden. Durch den vorhandenen Abstand der Schweißnähte entsteht im Überlappungsbereich benachbarter Randbereiche des Blechbandes ein Spaltbereich zwischen den überlappenden Wandungen, der nach Herstellung des Behälters in nicht einfacher Art und Weise kontrollierbar ist bezüglich möglicher Korrosionsrisiken oder dergleichen.

Bei den bekannten Vorrichtungen zum Herstellen eines zylindrischen Behälters mit großem Durchmesser wird im Rahmen der Profiliereinrichtung eine Profilierstation eingesetzt, bei der das Versatzmaß des Überlappungsbereiches fest vorgegeben ist. Da das Versatzmaß mit der jeweilig eingesetzten Dicke des Blechbandes korrespondiert, müssen für unterschiedliche Blechstärken unterschiedliche Profilierstationen eingesetzt werden. Darüber hinaus stoßen die bekannten Profilierstationen zur Erzeugung des Versatzes bei relativ großen Blechstärken an Ihre Grenzen, da der plastische Formvorgang zur Erzeugung eines relativ großen Versatzmaßes starke Geräusche während des Formvorgangs entwickelt, die nicht akzeptiert werden können.

### DARSTELLUNG DER ERFINDUNG

Ausgehend von dem genannten Stand der Technik bezüglich der geschweißten Ausführung liegt der vorliegenden Erfindung die Aufgabe beziehungsweise das technische Problem zugrunde, eine Vorrichtung zum Herstellen eines zylindrischen Behälters der eingangs genannten Art bereit zu stellen, die das Anwendungsspektrum derartig hergestellter Behälter weiter vergrößert, insbesondere - unter Beibehaltung der wirtschaftlichen Herstellbarkeit vor Ort durch wendelförmige Blechbänder - gewährleistet, dass unterschiedliche und sehr große Wandstärken für das Blechband - ohne dass aufwendige Umrüstungen erforderlich sind - verwendbar sind, die durch die bekannten Falzverfahren nicht umsetzbar sind, höchste Anforderungen an Reinheit, Medienresistenz und Dichtheit des Behälters erfüllt werden und eine dauerhaft zuverlässige Montage gewährleistet und die Umsetzung von Behältergrößen bezüglich Durchmesser und Höhe ermöglicht, die bisher nicht umsetzbar waren.

Die erfindungsgemäße Vorrichtung ist durch die Merkmale des unabhängigen Anspruchs 1 gegeben.

Vorteilhafte Ausgestaltungen und Weiterbildungen sind Gegenstand der von dem unabhängigen Anspruch 1 direkt oder indirekt abhängigen Ansprüche.

Die erfindungsgemäße Vorrichtung der eingangs genannten Art zum Herstellen eines zylindrischen Behälters mit großem Durchmesser, insbesondere eines Silos, zeichnet sich demgemäß dadurch aus, dass zum Formen des versetzten Überlappungswandbereichs eine Profilierstation Mittel zum variablen Einstellen des jeweils erforderlichen in das Blechband einzuformenden Versatzmaßes aufweist, wobei die Profilierstation zum Formen des versetzten Überlappungswandbereichs folgende Komponenten aufweist: eine um eine erste Drehachse ortsfest drehbar antreibbare Führungsandruckrolle mit einem unteren Führungsandruckrollenbereich, dessen Stirnwandung unmittelbar unterhalb des Überlappungswandbereichs / Versatzbereiches des Blechbandes außenseitig anliegt und mit einem oberen Führungsrollenbereich, dessen Durchmesser kleiner ist als der Durchmesser des unteren Führungsandruckrollenbereichs, ein um eine zweite Drehachse ortsfest drehbar angetriebene zweite Führungsandruckrolle, deren Stirnseite auf der gegenüberliegenden Seite des unteren Führungsandruckrollenbereichs der ersten Führungsandruckrolle außenseitig an dem Blechband anliegt, eine auf der zweiten Führungsandruckrolle drehbar schwimmend gelagerten nicht angetriebenen Versatzformrolle, zumindest eine, insbesondere zwei drehbare Andruckrollen, die in einer Richtung senkrecht zur Blechbandebene E variabel positionierbar sind, die auf die schwimmend gelagerte Versatzformrolle einwirken und damit deren Drehposition ihrer Drehachse zur Einstellung des Versatzmaßes jeweils festlegen.

Dadurch, dass die Profilierstation zum Formen des Versatzmaßes variabel eingestellt werden kann, entfallen aufwendige Umrüstarbeiten für den Fall, dass in einer Profilierstation unterschiedliche Blechstärken bearbeitet werden müssen.

Eine besonders bevorzugte Ausgestaltung zeichnet sich dadurch aus, dass in Umfangsrichtung mehrere hintereinander angeordnete Profilierstationen zum schrittweisen plastischen Anformen des Kragflansches an den oberen Randbereich des Blechbandes angeordnet sind und die Profilierstation zum Verformen des versetzten Überlappungswandbereichs die in Umfangsrichtung letzte Station ist. Mit einer derartigen Anordnung ist eine zuverlässige Anformung sowohl des Kragflansches als auch des versetzten Überlappungsbereichs im oberen Randbereich des zugeführten Blechbandes möglich.

Um mögliche Zwängungen und daraus resultierende Beanspruchungen zu verhindern und auch zur Verminderung des Geräuschpegels während des Formvorgangs zeichnet sich eine besonders bevorzugte Ausgestaltung dadurch aus, dass zwischen der zweiten Führungsandruckrolle und der Versatzformrolle eine ringförmige Lagerscheibe angeordnet ist. Dabei hat sich der Einsatz einer ringförmigen Lagerscheibe aus Messing besonders bewährt.

Eine weitere besonders vorteilhafte Weiterbildung, die eine geringe Störanfälligkeit aufweist und einen zuverlässigen Verformungsvorgang gewährleistet, zeichnet sich dadurch aus, dass zumindest eine weitere drehbare Führungsrolle vorhanden ist, die an der Stirnaußenseite der Versatzformrolle anliegt.

Eine konstruktiv besonders einfach umzusetzende, eine dauerhaft zuverlässige gewährleistende Ausführungsvariante ist dadurch gekennzeichnet, dass die zweite Führungsandruckrolle eine Zentralausnehmung mit einem Durchmesser aufweist, durch die hindurch ein angetriebener zweiter Drehlagerzapfen zum Antreiben der zweiten Führungsandruckrolle geführt ist, wobei der zweite Drehlagerzapfen eine Drehachse bildet, und die Versatzformrolle eine Zentralausnehmung mit einem Durchmesser aufweist, der größer ist als der Durchmesser der Zentralausnehmung der Versatzformrolle und der Versatzformrolle je nach gewähltem Versatzmaß exzentrisch zur zweiten Führungsandruckrolle beziehungsweise deren Drehachse angeordnet ist.

Es hat sich als besonders vorteilhaft herausgestellt, die Kontur der Versatzformrolle und Andruckrollen so auszugestalten, dass die Stirnaußenumfangskontur der Versatzformrolle eine Neigung aufweist und die Stirnaußenumfangskontur der Andruckrolle eine entsprechende Gegenneigung aufweist.

Um zu gewährleisten, dass ein ausreichend großer Anpressdruck für die Andruckrollen jederzeit gewährleistet werden kann, zeichnet sich eine besonders vorteilhafte Ausgestaltung dadurch aus, dass eine Spanneinheit vorhanden ist, die drückend auf die Andruckrollen einwirkt.

Eine in der Praxis bewährte Ausgestaltung, die einen zuverlässigen Formvorgang gewährleistet zeichnet sich dadurch aus, dass die beiden Andruckrollen in einem Umfangswinkel von 90° versetzt an der Stirnaußenumfangskontur der Versatzformrolle angeordnet sind.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Seitenansicht eines Behälters mit einem wendelförmig gebogenen Blechband, der mit einer erfindungsgemäßen Vorrichtung hergestellt worden ist,
- Fig. 2: schematischer Detaillängsquerschnitt durch die Wandung des Behälters gemäß Fig. 1,
- Fig. 3: schematische Draufsicht auf eine Vorrichtung zum Herstellen des Behälters gemäß Fig. 1 und 2 aus einem wendelförmig gebogenen Blechband mit einer Haspel, einer Profiliereinrichtung, einer Steuereinrichtung, einer Drehantriebseinrichtung und einer Schweißeinrichtung, ohne Darstellung eines ringförmigen Montagerahmens,
- Fig. 4a: schematische Draufsicht auf die Vorrichtung gemäß Fig. 3 mit zusätzlichen in Umfangsrichtung um 90 ° verteilt angeordneten Zusatzdrehantrieben,
- Fig. 4b: schematische Ansichtsdarstellung der Zusatzdrehantriebe gemäß Fig. 4a,
- Fig. 5: schematische Detailausschnittsdraufsicht auf eine Vorrichtung im Bereich der Drehantriebs- und Schweißeinrichtung mit zusätzlicher Darstellung des ringförmigen Montagerahmens mit Tragstützen und Tragrollen,
- Fig. 6: stark schematisierte Detailquerschnittsdarstellung in Bereich der Drehantriebseinrichtung mit Führungsrollen und darüber angeordneter Höheneinstellstation mit Führungsrollen,
- Fig. 7a bis d: schematischer Detailquerschnitt im Randbereich übereinander angeordneter Blechbänder, die im unterschiedlichen Höhenniveau angeordnet sind mit durchgehender beidseitiger Schweißung (Fig. 7a und b) und mit Schweißverbindung mit Überlappung (Fig. 7c und d),
- Fig. 8: stark schematisierte Ansichtsdarstellung von Mitteln zum Einstellen der Höhenposition die über Gewindestangen und Gewindemuttern höhenmäßig einstellbare Führungsrollen aufweisen,
- Fig. 9: stark schematisierte Ansichtsdarstellung von Mitteln zum Einstellen der Höhenposition die Führungsrollen aufweisen, die im Endbereich eines verstellbaren V-Hebelmechanismus angeordnet sind,
- Fig. 10: ausschnittsweise in einer abgewickelten Ansicht und in einer ausschnittsweisen Draufsicht dargestelltes Ausführungsbeispiel eines ringförmigen Montagerahmens mit Tragstützen und Tragrollen,
- Fig. 11: Querschnitt durch eine Profilierstation zum Anformen eines versetzten Überlappungsbereiches an den oberen Randbereich eines Blechbandes mit einer ersten Führungsandruckrolle, einer am Blechband gegenüberliegenden zweiten Führungsandrucksrolle und eine auf der zweiten Führungsandruckrolle schwimmend gelagerten Versatzformrolle, die unter der Wirkung von Andruckrollen steht,
- Fig. 12: schematische Draufsicht auf die Konstruktion gemäß Fig. 11 und
- Fig. 13: schematischer Querschnitt einer vergrößerten Darstellung der zweiten Führungsrolle mit schwimmend gelagerter Versatzformrolle mit Andruckrollen in zwei unterschiedlichen Positionen.

### WEGE ZUM AUSFÜHREN DER ERFINDUNG

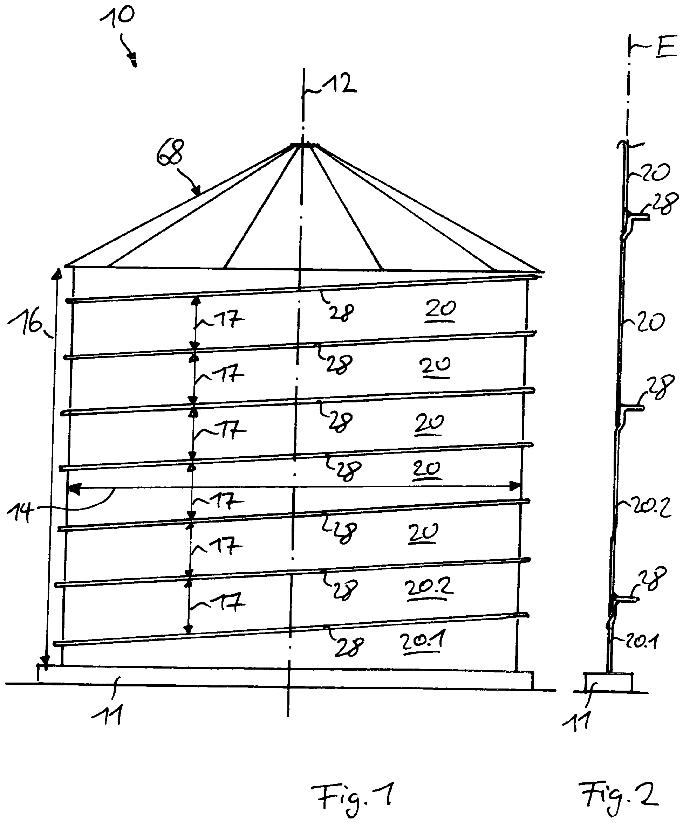

Die Fig. 1 zeigt eine Ansicht eines Behälters 10, wie er zum Aufbewahren von Schüttgütern aus der Land- und Forstwirtschaft, beispielsweise Getreide, Holzschnitzel oder Bioabfall, ebenso eingesetzt werden kann oder zum Speichern von Wasser, Abwasser oder Klärschlamm oder auch zum Speichern von Gas oder Erdöl. Der Behälter 10 ist auf seiner Außenseite und seiner Innenseite im Wesentlichen zylindrisch, insbesondere kreiszylindrisch, mit einer vertikal ausgerichteten Längsachse 12 ausgebildet. Der fertige Behälter 10 ist auf einem Fundament 11 gelagert und oberseitig mit einer kegel- oder kegelstumpfförmigen Dachkonstruktion 68 abgedeckt.

Die Herstellung des Behälters 10 erfolgt unter Verwendung eines wendelförmig gebogenen Blechbandes 20 vorzugsweise unmittelbar am Aufstellungsort des Behälters 10. Der Durchmesser 14 des Behälters 10 kann beispielsweise zwischen 4 m und 50 m oder mehr betragen. Die Höhe 16 des Behälters 10 kann zwischen 2 m und 40 m oder mehr betragen. Das Fassungsvolumen des Behälters 10 kann beispielsweise zwischen 15 m³ und 10.000 m³ betragen. Die vorzugsweise homogene Dicke des Blechbandes 20 beträgt zwischen 2 mm und 10 mm. Die Breite 17 des Blechbandes 20 kann zwischen 20 cm und 100 cm betragen, im dargestellten Ausführungsbeispiel beträgt die Breite 17 des Blechbandes 20 etwa 50 cm.

In Fig. 2 ist das Detail A von Fig. 1 im Verbindungsbereich dargestellt. Dargestellt ist jeweils der obere Randbereich 22 eines unteren Blechbandes 20.1 und eines in der Vertikalen oberseitig benachbarten oberes Blechband 20.2 mit unterem Randbereich 24 im unteren Bereich des Behälters 10. Beide Blechbänder 20.1, 20.2 sind in einer Ebene E wendelförmig verlaufend angeordnet, wobei die Ebene E die Mittelebene des Behälters 10 darstellt. Die darüber wendelförmig in der Ebene E verlaufenden Blechbänder sind mit dem Bezugszeichen 20 bezeichnet. Die Blechbänder 20.1, 20.2, 20 weisen jeweils einen zur Außenseite hin ausgebogenen Randabschnitt 22 auf, der einen Kragflansch 28 bildet.

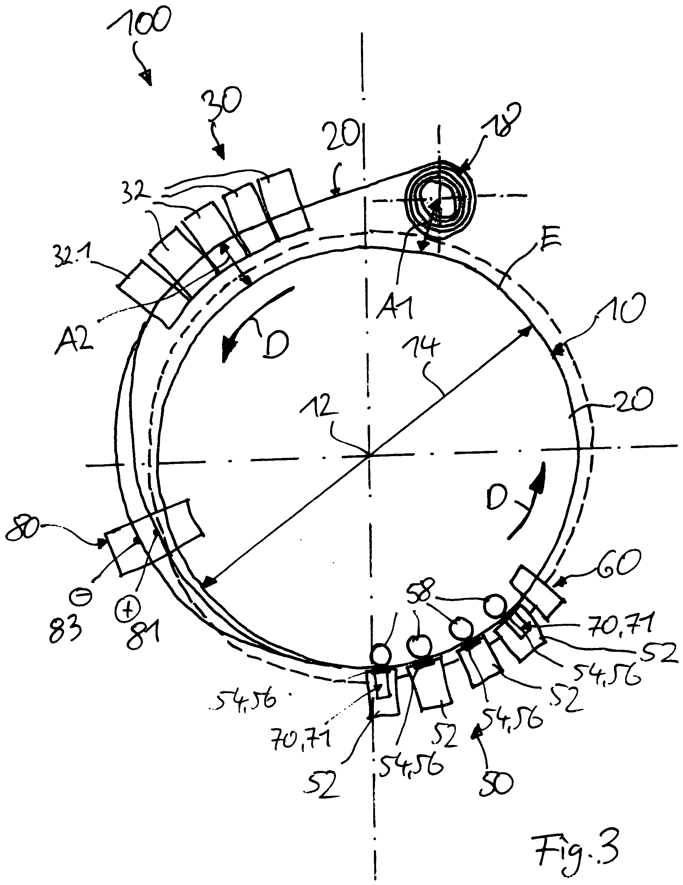

In Fig. 3 ist stark schematisiert eine Vorrichtung 100 zum Herstellen eines als Silo ausgebildeten Behälters 10 aus einem gekrümmt gewendelt verlaufenden Blechbandes 20 dargestellt. Die Vorrichtung 100 weist dabei folgende wesentliche Komponenten auf:
Eine Haspel 18, auf der das Blechband 20 aufgewickelt und abziehbar vorhanden ist. Die Haspel 18 ist außerhalb (Abstand A1) der zylindrischen Ebene E des Behälters 10 angeordnet. Das von der Haspel 18 abgezogene Blechband 20 wird einer außerhalb (Abstand A2) des Behälters 10 angeordnete Profiliereinrichtung 30 zugeführt, die ebenfalls außerhalb der zylindrischen Ebene E beziehungsweise der Umfangslinie des Behälters 10 angeordnet ist und die aus mehreren in Umfangsrichtung hintereinander angeordneten Profilierstationen 32 besteht.

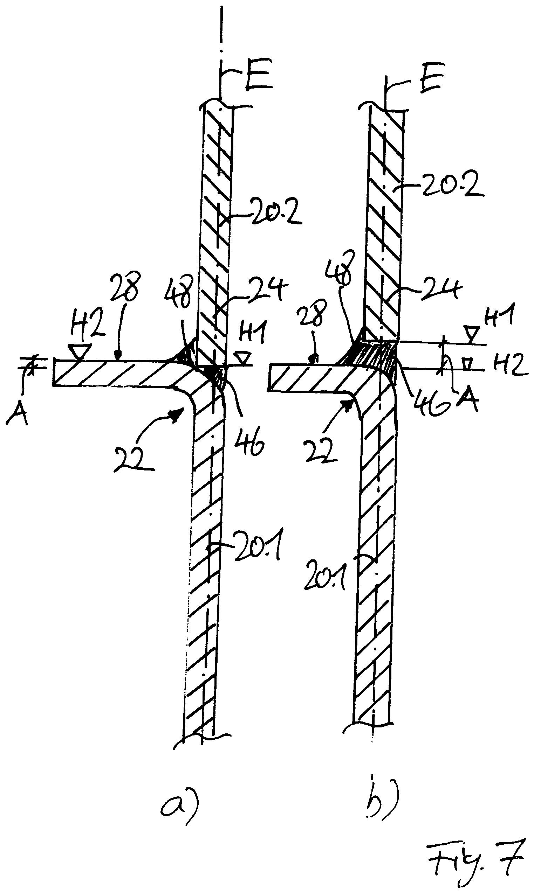

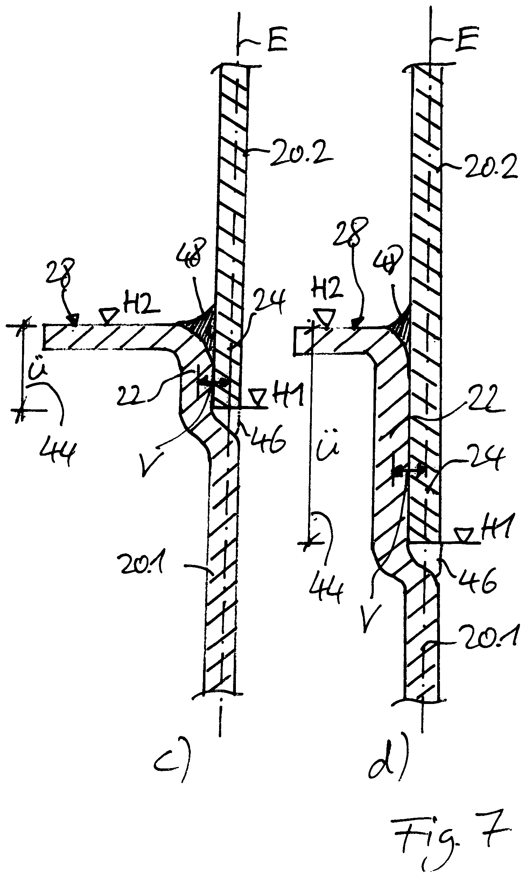

Die Profilierstationen 32 haben die Aufgabe den oberen Blechrandbereich des zugeführten Blechbandes 20 schrittweise plastisch zu verformen, so dass nach dem Durchlaufen der Profiliereinrichtung 30 im oberen Randbereich des Blechbandes ein nach außen weißender Kragflansch 28 (siehe beispielsweise Fig. 7a, b) angeformt ist oder alternativ neben der Ausbildung eines Kragflansches 28 daran anschließend ein nach außen versetzt zur Ebene E vorhandener und nach unten verlaufender Überlappungsbereich 44 mit der Länge Ü (siehe beispielsweise Fig. 7c, d) gebildet wird.

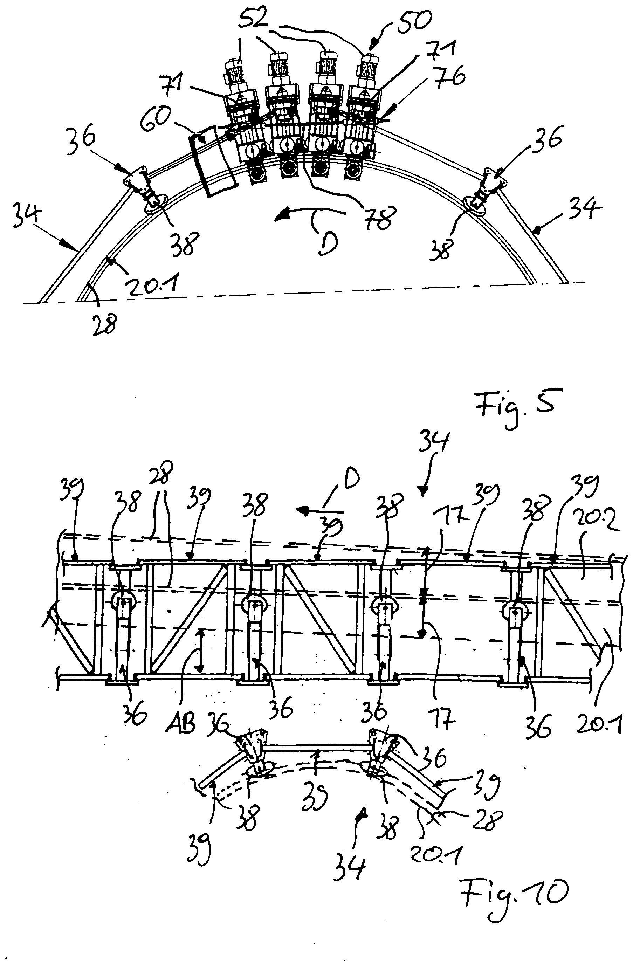

Weiterhin ist ein in Fig. 3 lediglich stark schematisiert und gestrichelt dargestellter ringförmiger Montagerahmen 34 vorhanden, der in Fig. 5 und 10 schematisch näher dargestellt ist. Der Montagerahmen 34 umgibt die zylindrische Ebene E des Behälters 10 nach außen versetzt und weist in Umfangsrichtung beabstandete Tragstützen 36 auf, die jeweils eine Tragrolle 38 besitzen, auf der sich der untere Rand des Kragflansches 28 des jeweils unteren Blechbandes 20.1 mit den jeweils darüber angeschlossenen Blechbändern 20.2, 20 abstützt, wobei die Tragrollen 38 in Umfangsrichtung gesehen in einer wendelförmigen Kurvenbahn (Schraubenlinie) angeordnet sind. Zwischen den Tragstützen 38, die mit dem Boden verschraubt sind, ist eine Aussteifungskonstruktion 39 mit Oberguten, Untergurten, Pfosten und Diagonalen angeschlossen. Der Abstand des unteren Randes des unteren Blechbandes 20.1 vom Boden ist mit AB bezeichnet. Über diesen Abstandsbereich kann man während der Montage in das Innere des Behälters 10 gelangen oder Material hindurch reichen.

Wie in Fig. 5 dargestellt ist die auf der ersten Drehantriebsstation 52 und die auf der letzten Drehantriebsstation 52 angeordnete Höheneinstellstation 71 mittels einer Verspanneinheit 76 miteinander verspannt, wobei die Verspanneinheit 76 im Ausführungsbeispiel als Spannstange ausgebildet ist. Dadurch wird eine höhere Stabilität der Vorrichtung 100 gewährleistet.

Nach dem Verlassen der Profiliereinrichtung 30 wird das bearbeitete Blechband 20.1 einer Drehantriebseinrichtung 50 mit nachgeordneter Schweißeinrichtung 60 zugeführt, wobei die Drehantriebseinrichtung 50 mehrere in Umfangsrichtung hintereinander angeordnete Drehantriebsstationen 52 aufweist und jede Drehantriebsstation 52 eine obere und untere Führungsrolle 54, 56 außenseitig aufweist zwischen denen der Kragflansch 28 in der wendelförmigen Kurvenbahn geführt ist, wobei jeweils gegenüberliegend innenseitig eine drehbare Andruckrolle 58 vorhanden ist. Sobald das Blechband 20 die Drehantriebseinrichtung 50 erreicht, befindet sich das Blechband 20 schraubenlinienförmig verlaufend in der zylindrischen Ebene E und bildet die Wandung des Behälters 10. Durch die Drehantriebseinrichtung 50 wird das Blechband 20 um die Längsachse 12 gedreht und wandert schraubenlinienförmig nach oben, so dass sich der in Fig. 1 dargestellte Behälter 10 in Form eines Silos ergibt. Gleichzeitig werden im Bereich unmittelbar nach der Drehantriebseinrichtung 50 durch die Schweißeinrichtung 60 der obere Randbereich 22 des unteren der Schweißeinrichtung 60 zugeführten Blechbandes 20.1 mit dem unteren Randbereich 24 des oberen zugeführten Blechbandes 20.2 miteinander verschweißt. Die Schweißung erfolgt dabei von außen. Zusätzlich kann auch noch eine Schweißnaht von innen angebracht werden. Die konstruktive Ausgestaltung der Schweißverbindung(en) ist in den Figuren 7a bis d dargestellt und wird weiter unten beschrieben.

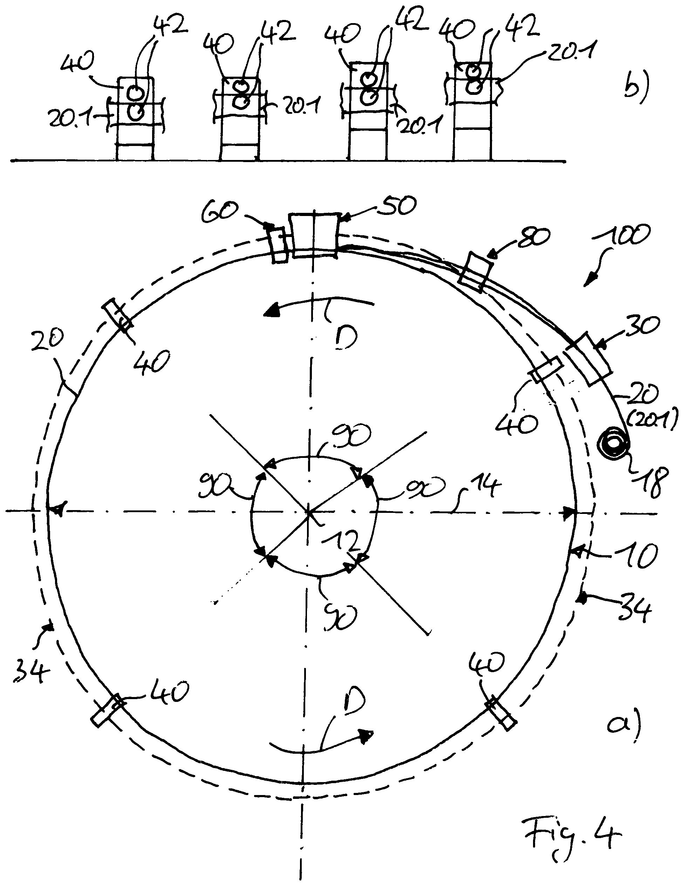

Die Darstellung der Vorrichtung 100 gemäß Fig. 4a entspricht im Wesentlichen dem Aufbau der Vorrichtung gemäß Fig. 3. Gleiche Bauteile trage dasselbe Bezugszeichen und werden nicht noch einmal erläutert. Zusätzlich sind in Fig. 4a noch Zusatzdrehantriebe 40 dargestellt, die in Umfangsrichtung in einem Umfangswinkel von 90 ° versetzt angeordnet sind und jeweils Antriebsrollenpaare 42 (siehe Fig. 4b) aufweisen zwischen denen der Kragflansch 28 des jeweils unteren Blechbandes 20.1 geführt ist. Diese Zusatzdrehantriebe 40 ermöglichen eine problemlose Herstellung von Behältern 10 mit sehr großen Gewichten. Die Zusatzdrehantriebe 40 können in ihrer Höhe unterschiedlich ausgebildet sein (siehe Fig. 4b), wobei die Antriebsrollenpaare 42 in ihrer Höhenposition einstellbar sind und gleichzeitig im Verlauf der schraubenlinienförmigen Bahn des Kragflansches 28 des Blechbandes 20.1 angeordnet sind.

In Fig. 3 und 4 ist zwischen der Profiliereinrichtung 30 und der Drehantriebseinrichtung 50 eine Steuereinrichtung 80 außenseitig angeordnet, die den Abstand des zugeführten Blechbandes 20 relativ zur kreiszylindrischen Ebene E des Behälters 10 detektiert und bei Überschreiten eines vorgegebenen Maximalwertes 81 oder bei Unterschreiten eines vorgegebenen Minimalwertes 83 die nicht näher dargestellten Antriebsaggregate der Profiliereinrichtung 30 und der Drehantriebseinrichtung 50 entsprechend ansteuert, so dass ein kontinuierliches positionsgenaues Zuführen des Blechbandes 20 zur Drehantriebseinrichtung 50 und damit zur Schweißeinrichtung 60 zum Herstellen einer kontinuierlich homogenen Schweißnaht gewährleistet ist.

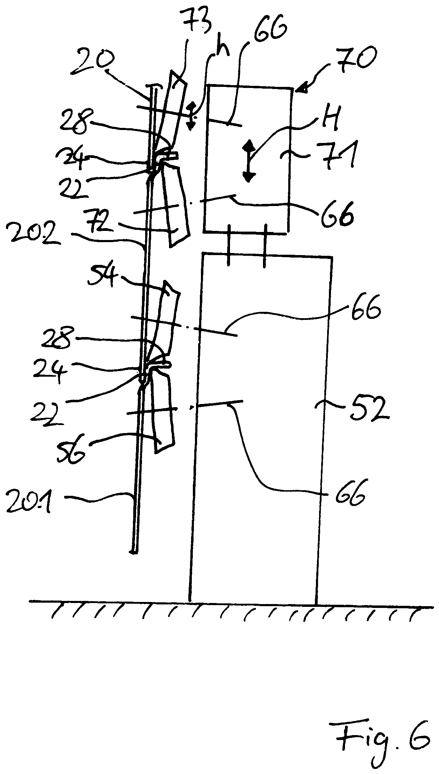

In Fig. 3 und in Fig. 6 sind stark schematisiert Mittel 70 zum Einstellen der Höhenposition des oberen Blechbandes 20.2 und der darüber verschweißt vorhandenen weiteren Blechbänder 20 relativ zum unteren zugeführten Blechbandes 20.1 dargestellt. Die Höhenposition des unteren zugeführten Blechbandes 20.1 im Bereich der Drehantriebseinrichtung 50 beziehungsweise der Drehantriebsstationen 52 ist durch die Höhenposition der unteren Führungsrolle 56 in Verbindung mit der oberen Führungsrolle 54 fest vorgegeben. Die Mittel 70 zum Einstellen der Höhenposition des oberen Blechbandes 20.2 und damit auch der darüber verlaufenden bereits miteinander verschweißten Blechbänder 20 weisen in den dargestellten Ausführungsbeispielen zwei Höheneinstellstationen 71 auf, die oberhalb der ersten und letzten Drehantriebsstation 52 angeordnet sind. Jede Höheneinstellstation 71 weist eine untere Führungsrolle 72 und eine obere Führungsrolle 74 auf, wobei der Kragflansch 28 zwischen den beiden Führungsrollen 72, 74 geführt ist. Die beiden Führungsrollen 72, 74 sind höhenverstellbar (Pfeil H in Fig. 6) an der Drehantriebsstation 52 vorhanden, so dass das zugeführte obere Blechband 20.2 bezüglich seiner Höhenposition relativ zum unteren zugeführten Blechbandes 20.1 höhenmäßig positioniert werden kann. Ausführungsbeispiele bezüglich der Positionierung in Verbindung mit der Ausbildung der Schweißnaht sind in den Figuren 7a bis d näher dargestellt. Des Weiteren ist jede Drehantriebsstation 52 so ausgebildet, dass die jeweilige Höhenposition der unteren Führungsrolle 56 relativ zur oberen Führungsrolle 54 einstellbar ist, so dass Kragflansche 28 mit unterschiedlicher Querschnittsdicke zwischen den Führungsrollen 54, 56 geführt werden können.

In den Figuren 7a bis d sind unterschiedliche mögliche Höhenpositionen des oberen Blechbandes 20.2 relativ zum unteren Blechband 20.1 dargestellt. In Fig. 7a ist im oberen Randbereich 22 des unteren Blechbandes 20.1 ein nach außen weisender Kragflansch 28 durch die Profiliereinrichtung 30 angeformt worden, dessen Höhenniveau oberseitig mit H2 bezeichnet ist. Der geradlinig verlaufende untere Randbereich 24 des oberen Blechbandes 20.2 weist mit seiner unteren Stirnkante ein Höhenniveau H1 auf, wobei die Stirnaußenkante der Stirnfläche außenseitig im Bereich der Krümmung des Kragflansches 28 auf diesem anliegt. Das Höhenniveau H1 unterscheidet sich von dem Höhenniveau H2 um das Abstandsmaß A. Bei dieser Ausgestaltung kann die Verbindung des oberen Randbereiches 22 des unteren Blechbandes 20.1 mit dem unteren Randbereich 24 des oberen Blechbandes 20.2 über eine innenseitige Schweißnaht 48 und eine gegenüberliegende außenseitige Schweißnaht 46 erfolgen.

Im Unterschied zur Darstellung gemäß Fig. 7a ist die Positionierung des oberen Blechbandes 20.2 relativ zum unteren Blechbandes 20.1 in Fig. 7b nach oben beabstandet (Abstandsmaß A1) durch die Höheneinstellstation 71 eingestellt, so dass die Anbringung von zwei beidseitig durchgeschweißten Schweißnähten 46, 48 mit einer größeren Schweißnahtdicke möglich ist.

In den Figuren 7c und d ist eine Verbindungskonstruktion zwischen oberen und unteren Blechband 20.1, 20.2 mittels einer außenseitigen Schweißnaht 48 (Fig. 7c) und wahlweise zusätzlich mit einer innenseitigen Schweißnaht (Fig. 7d) dargestellt, bei der ein Überlappungsbereich 44 beziehungsweise Ü zwischen dem unteren Randbereich 24 und oberen Randbereich 22 gegeben ist. Der Überlappungsbereich 44 des oberen Randbereiches 22 des unteren Blechbandes 20.1 ist dabei nach außen versetzt zur zylindrischen Ebene E nach unten anschließend an den nach außen weisenden Kragflansch 28 vorhanden, wobei der Versatz des Bereiches 44 nach außen im Wesentlichen der Blechdicke des Blechbandes 20.2 entspricht. Die innere Schweißnaht 46 ist gemäß Fig. 7d am unteren Endbereich des Überlappungsbereiches 44 angeordnet. Je nach Höhenpositionierung H1 des oberen Blechbandes 20.2 und entsprechender Ausbildung des Überlappungsbereiches 44, Ü sind unterschiedliche Überlappungslängen problemlos möglich. Die jeweilige Überlappungslänge kann durch entsprechende Positionierung der Führungsrollen 72, 74 der Höheneinstellstationen 71 von Fall zu Fall eingestellt werden.

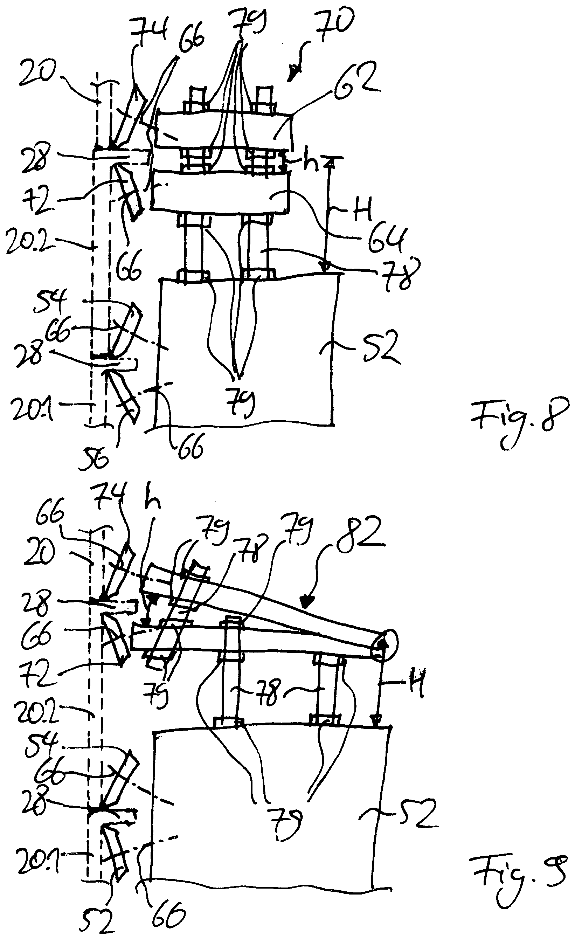

Fig. 8 zeigt stark schematisiert ein erstes Ausführungsbeispiel von Mitteln 70 zum Einstellen der Höhenposition des oberen Blechbandes 20.2. Die Höheneinstellstation 71 weist dabei eine schematisch dargestellte obere Lagereinheit 62 und eine untere Lagereinheit 64 auf, von denen jeweils die obere Führungsrolle 74 beziehungsweise die untere Führungsrolle 72 über eine geneigte Drehachse 66 drehbar angeschlossen ist. Die obere Lagereinheit und untere Lagereinheit 62, 64 sind über zwei durchgehende Gewindestangen 78 oberseitig an der Drehantriebsstation 52 angeschlossen, wobei jeweils ober- und unterseitig an der oberen und unteren Lagereinheit 62, 64 Gewindestangenmuttern 79 vorhanden sind. Die Höhenposition beider Führungsrollen 72, 74 und damit die Höhenposition des Kragflansches 28 des oberen Blechbandes 20.2 (Pfeil H) und damit die Höhenposition H2 des unteren Randbereiches 24 kann durch entsprechende Verdrehung der Gewindestangenmuttern 79 absolut eingestellt werden. Die relative Position beider Führungsrollen 72, 74 zueinander (Pfeil h) ist ebenfalls durch entsprechende Drehung der Gewindestangenmuttern 79 einstellbar. Auch die Ausbildung einer Scherenkonstruktion ist möglich.

Eine weitere mögliche konstruktive Ausgestaltung der Höheneinstellstation 71 ist in Fig. 9 stark schematisiert dargestellt. Diese Station ist als V-förmiger Hebelmechanismus 82 ausgebildet, wobei im Endbereich der beiden Hebel jeweils die untere Führungsrolle 72 beziehungsweise die obere Führungsrolle 74 über die Drehachse 66 drehbar angeschlossen ist und der Hebelmechanismus 82 als ganzes in seiner Höhenposition (Pfeil H) einstellbar ist und die relative Position der oberen Führungsrolle zur unteren Führungsrolle (Pfeil h) relativ zueinander einstellbar ist.

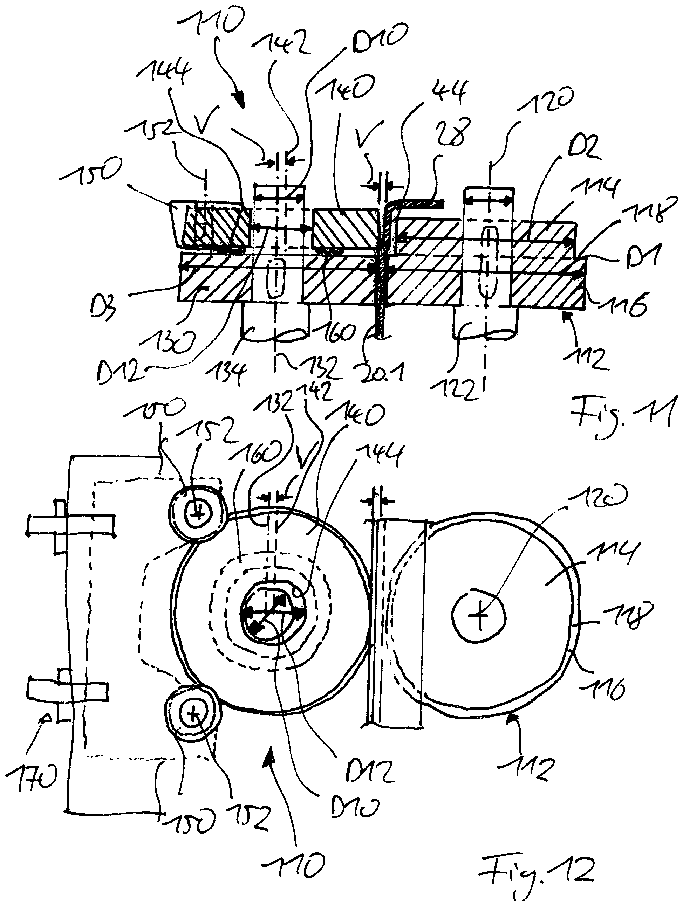

In den Figuren 11, 12 und 13 ist stark schematisiert im Detail eine konstruktive Ausführungsform einer Profilierstation 32.1 der Profiliereinrichtung 30 dargestellt, die in Drehrichtung D gesehen, die letzte und damit fünfte Profilierstation (siehe Fig. 3) darstellt, die Mittel 110 zum Einstellen des Versatzmaßes V des Überlappungsbereiches 44 aufweist. Der Profilierstation 32.1 wird das Blechband 20 beziehungsweise 20.1 in der Blechbandebene E zugeführt, wobei die Blechbandebene E in Fig. 12 vereinfacht als geradlinig ebene Ebene dargestellt ist, die in der Praxis jedoch in dieser Position bereits eine Krümmung aufweist, die der Krümmung des herzustellenden zylindrischen Behälters 10 entspricht. Im in Fig. 11 und 12 rechten Bereich, das heißt im Außenbereich des Behälters 10 weist die Profilierstation 32.1 eine erste Führungsandruckrolle 112 auf, die einen oberen ersten Führungsrollenbereich 114 und einen einstückig darunter anschließenden unteren ersten Führungsandruckrollenbereich 116 aufweist, wobei der untere Führungsandruckrollenbereich 116 einen Durchmesser D1 und der darüber befindliche obere Führungsrollenbereich 114 einen Durchmesser D2 aufweist, der kleiner ist als der Durchmesser D1, wodurch zwischen dem unteren ersten Führungsandruckrollenbereich 116 und dem oberen ersten Führungsrollenbereich 114 ein Rücksprung 118 ensteht. Die erste Führungsandrucksrolle 112 ist um eine erste Drehachse 120 drehbar gelagert, die durch einen ersten Drehlagerzapfen 122 gebildet wird, der auf einem in Fig. 11 nicht näher dargestellten Antrieb drehbar angetrieben wird.

Der untere erste Führungsandruckrollenbereich 116 liegt außenseitig an dem zugeführten Blechband 20, 20.1 an.

Gegenüberliegend zum unteren ersten Führungsandruckrollenbereich 116 ist innenseitig an dem Blechband 20 anliegend eine zweite Führungsandruckrolle 130 angeordnet, die um eine zweite Drehachse 132 drehbar gelagert ist, wobei die zweite Drehachse 132 durch einen zweiten Drehlagerzapfen 134 gebildet wird, der über ein in Fig. 11 nicht näher dargestelltes Antriebsaggregat antreibbar ist. Die erste Drehachse 120 und die zweite Drehachse 132 verlaufen parallel vertikal.

Im Bereich der Profilierstation 32.1 wird an das Blechband 20 beziehungsweise 20.1 im oberen Randbereich 22 unterhalb einem nach außen weisenden Kragflansch 28 ein versetzt nach außen zur Ebene E vorhandener Überlappungsbereich 44 umgeformt, der um das Versatzmaß V versetzt nach außen zur Ebene E nach Einprägung der plastischen Verformung vorhanden ist. Zum Ausbilden des versetzten Überlappungsbereich 44 werden Mittel 110 zum Einstellen des Versatzmaßes V eingesetzt, die im Ausführungsbeispiel eine oberseitig auf der zweiten Führungsandruckrolle 130 schwimmend gelagerten Versatzformrolle 140 mit einer Versatzrollendrehachse 142 und zwei in Umfangsrichtung um circa 90° versetzt angeordneten Andruckrollen 150 mit jeweils einer Andruckrollendrehachse 152 gebildet wird. Die zweite Drehachse 132 der zweiten Führungsandruckrolle 130, die Versatzrollendrehachse 142 der Versatzrolle 140 und die Andruckrollendrehachsen 152 der Andruckrollen 150 sind jeweils parallel ausgebildet.

Der Durchmesser D3 der zweiten Führungsandruckrolle 130 entspricht dem Durchmesser D1 des gegenüberliegenden Führungsandruckrollenbereichs 116.

Die zweite Führungandruckrolle 130 weist eine Zentralausnehmung 162 auf, durch die hindurch der zweite Drehlagerzapfen 134 geführt ist. Die Versatzformrolle 140 weist eine Versatzformrollenzentralausnehmung 164 auf, deren Durchmesser D12 größer ist als der Durchmesser D10 der Zentralausnehmung 162. Dadurch ist es möglich, dass die Versatzformrolle 140 bezüglich ihrer Versatzrollendrehachse 142 versetzt gegenüber der zweiten Drehachse 132 der zweiten Führungsandruckrolle 130 positionierbar ist. Dieses Versatzmaß V ist durch die entsprechende Positionierung der beiden Andruckrollen 150 mit ihrer jeweiligen Andruckrollendrehachse 152 positionierbar und bestimmt definitiv das jeweils gewählte Versatzmaß V des Überlappungsbereichs 44 gegenüber dem Restwandbereich des zugeführten Blechbandes 20 beziehungsweise 20.1.

Wie bereits beschrieben ist die Versatzformrolle 140 schwimmend auf der zweiten Führungsandruckrolle 130 gelagert, wobei zwischen beiden Rollen 140,130 eine ringförmige Lagerscheibe 160 angeordnet ist, die beispielsweise aus Messing sein kann.

Zur Positionierung der Andruckrollen 150 zur Drehpositionierung der Andruckrollen 150 und damit zur Positionierung der Versatzformrolle 140 zur Festlegung des jeweiligen geforderten Versatzmaßes V dient eine in Fig. 12 schematisch dargestellte Spanneinheit 170 mit Spannschrauben 172 mittels derer die jeweilige Position der Andruckrollen 150 und damit auch der Andruckkraft einstellbar ist.

Durch die dargestellte beispielhafte Konstruktion kann das jeweilige Versatzmaß V des Überlappungsbereichs 44 des oberen Randbereichs 22 des zugeführten Blechbandes 20, 20.1, das in praktischen Ausführungsbeispielen der jeweils gewählten Blechstärke entspricht, problemlos eingestellt werden, so dass diese Profilierstation 32.1 für Behälter 10 mit unterschiedlichster Blechstärke eingesetzt werden kann und den gewünschten Versatzmaßen in einfachster Art und Weise angepasst werden kann.

Die Versatzformrolle 140 weist eine nach oben sich verjüngend umfangsmäßig verlaufende Stirnseite auf, an der die jeweiligen Stirnseiten der Andruckrollen 150 mit entsprechend gegenläufig vorhandener nach unten sich verjüngender Neigung anliegt.

Um eine möglichst exakte Drehbewegung der Versatzformrolle 140 und damit zum Erzielen eines eindeutig definierten Versatzmaßes V zu gewährleisten, können noch weitere, in den Figuren 11 und 12 nicht näher dargestellte Führungs- beziehungsweise Andruckrollen vorhanden sein, die außenumfangsmäßig mit der Stirnumlauffläche der Versatzformrolle 140 in Kontakt stehen.

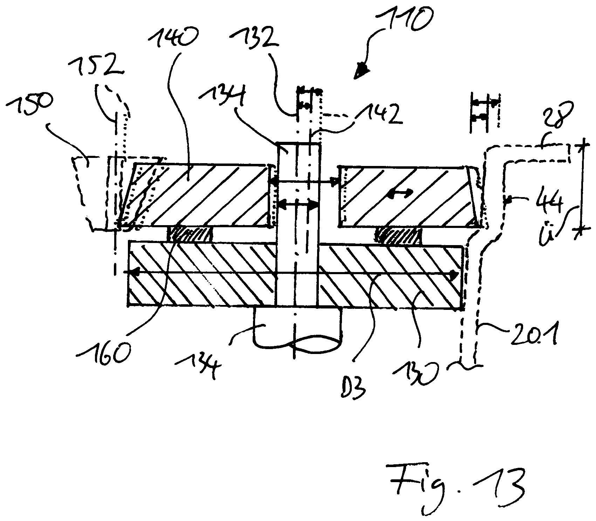

Die Fig. 13 zeigt stark schematisiert zwei unterschiedliche Positionen der Versatzformrolle 140 relativ zur zweiten Führungsandruckrolle 130 zum Erzeugen eines jeweils unterschiedlichen Versatzmaßes V1 oder V2. Diese unterschiedliche Ausbildung des Versatzmaßes kann wie bereits oben beschrieben durch einfaches Verschieben der Andruckrollen 150 mittels der Spanneinheit 170 für den jeweils gewünschten Einsatzfall angepasst werden.

Durch den Einsatz einer schwimmend auf der zweiten Führungsandruckrolle 130 gelagerten Versatzformrolle 140 kann eine dauerhaft zuverlässige funktionsfähige Lösung zur plastischen Erzeugung eines vorbestimmten Versatzmaßes V im oberen Randbereich 22 des zugeführten Blechbandes 20, 20.1 erzielt werden, wobei eine hohe Maßhaltigkeit garantiert werden kann - auch bei unterschiedlichsten Blechstärken -, die Geräuschentwicklung bei der plastischen Verformung des Überlappungsbereichs 44 deutlich reduziert werden kann und gleichzeitig hohe Standzeiten mit geringem Verschleiß möglich sind.

Dadurch lassen sich Verbindungskonstruktionen zwischen benachbarten, schraubenlinienförmigen gewendelten Blechbändern unterschiedlichster Stärken problemlos umsetzen, wie sie beispielsweise in den Figuren 7c und 7d dargestellt sind. Durch die dargestellte konstruktive Ausgestaltung der Mittel 110 zum Einstellen des Versatzmaßes sind keine großen Umrüstungen im Bereich der Profilierstation 32.1 erforderlich zum Einstellen eines neuen Versatzmaßes. Es müssen lediglich die Andruckrollen 140 über die Spanneinheit 170 mit ihren Spannschrauben 172 auf die jeweils gewünschte Position zur Einstellung des Versatzmaßes V eingestellt werden.

Die Versatzformrolle 140 weist einen Maximaldurchmesser D4 auf, der im Wesentlichen dem Durchmesser D3 der zweiten Führungsandruckrolle 130 entspricht. Die plastische Verformung des Überlappungsbereichs 44 im oberen Randbereich 22 des zugeführten Blechbandes 20, 20.1 erfolgt hierbei nach außen hin in den durch den Rücksprung 118 der ersten Führungsandruckrolle 112 gebildeten rückspringenden Bereichs des oberen ersten Führungsrollenbereichs 114 . Die Größe des Rücksprungs 118 ist dabei so gewählt, dass genügend Raum zur Verfügung steht, so dass die jeweiligen Versatzmaße V des Überlappungsbereichs 44 problemlos plastisch geformt werden können.

## Patentansprüche

1. Vorrichtung zum Herstellen eines zylindrischen Behälters (10) mit großem Durchmesser (14), insbesondere eines Silos, aus einem auf einer Haspel (18) aufgewickelten anschließend wendelförmig gebogenen Blechbandes (20) mit
- einer auf dem Boden aufstellbaren Profiliereinrichtung (30) mit Profilierstationen (32), die eine der Wandbiegung des zylindrischen Behältnisses (10) entsprechend ausgebildete und versetzt verlaufende Bahn aufweist, der das Blechband (20) zugeführt wird, und die Profilierstation (32, 32.1) an den oberen Randbereich (22) des zugeführten Blechbandes (20) einen Kragflansch (28) und einen an den Flansch (28) nach unten anschließenden mit einem Versatzmaß (V) versetzt zur Blechbandebene (E) verlaufenden Überlappungswandbereich (44) anformt,
- einer auf den Boden aufstellbaren Drehantriebseinrichtung (50) mit Drehantriebsstationen (52),
- einer Schweißeinrichtung (60), die unmittelbar nach oder an der Drehantriebseinrichtung (50) zum Verschweißen eines überlappend benachbarten oberen mit einem unteren Randbereich (24, 22) des zugehörigen unteren und oberen Blechbandes (20.1, 20.2) angeordnet ist,
- einen auf den Boden aufstellbaren ringförmigen Montagerahmen (34), der in Abstand von seinem unteren Ende längs einer Schraubenlinie in Umfangsrichtung beabstandete Tragrollen (38) an Tragstützen (36) zur Unterstützung des Behälters (10) an dem Kragflansch (28) aufweist, wobei die Bahn der Profiliereinrichtung (30) neben der Bahn der durch die Tragrollen (36) bestimmten Schraubenlinie verläuft und wobei die Anordnung der Drehantriebseinrichtung (50) mit ihren Drehstationen (52) und der Schweißeinrichtung (60) mit der durch die Tragrollen (38) bestimmten schraubenlinienförmigen Bahn übereinstimmt,
- **dadurch gekennzeichnet, dass**
- zum Formen des versetzten Überlappungswandbereichs (44) eine Profilierstation (32.1) Mittel zum variablen Einstellen des jeweils erforderlichen in das Blechband (20) einzuformenden Versatzmaßes (V) aufweist, wobei
- die Profilierstation (32.1) zum Formen des versetzten Überlappungswandbereichs (44) folgende Komponenten aufweist:
- eine um eine erste Drehachse (120) ortsfest drehbar antreibbare Führungsandruckrolle (112) mit einem unteren Führungsandruckrollenbereich (116), dessen Stirnwandung unmittelbar unterhalb des Überlappungswandbereichs (44) / Versatzbereiches des Blechbandes (20) außenseitig anliegt und mit einem oberen Führungsrollenbereich (114), dessen Durchmesser (D2) kleiner ist als der Durchmesser (D1) des unteren Führungsandruckrollenbereichs (116),
- ein um eine zweite Drehachse ortsfest drehbar angetriebene zweite Führungsandruckrolle (130), deren Stirnseite auf der gegenüberliegenden Seite des unteren Führungsandruckrollenbereichs (116) der ersten Führungsandruckrolle (112) außenseitig an dem Blechband (20) anliegt,
- eine auf der zweiten Führungsandruckrolle (130) drehbar schwimmend gelagerten nicht angetriebenen Versatzformrolle (140),
- zumindest eine, insbesondere zwei drehbare Andruckrollen (150), die in einer Richtung senkrecht zur Blechbandebene E variabel positionierbar sind, die auf die schwimmend gelagerte Versatzformrolle (140) einwirken und damit deren Drehposition ihrer Drehachse (142) zur Einstellung des Versatzmaßes (V) jeweils festlegen.

2. Vorrichtung nach Anspruch 1,
- **dadurch gekennzeichnet, dass**
- in Umfangsrichtung mehrere hintereinander angeordnete Profilierstationen (32) zum schrittweisen plastischen Anformen des Kragflansches (28) an den oberen Randbereich (22) des Blechbandes (20) angeordnet sind und die Profilierstation (32.1) zum Verformen des versetzten Überlappungswandbereichs (44) die in Umfangsrichtung letzte Station ist.

3. Vorrichtung nach Anspruch 1,
- **dadurch gekennzeichnet, dass**
- zwischen der zweiten Führungsandruckrolle (130) und der Versatzformrolle (140) eine ringförmige Lagerscheibe (160) angeordnet ist.

4. Vorrichtung nach Anspruch 3,
- **dadurch gekennzeichnet, dass**
- die ringförmige Lagerscheibe aus Messing besteht.

5. Vorrichtung nach einem oder mehreren der Ansprüche 1 bis 4,
- **dadurch gekennzeichnet, dass**
- zumindest eine weitere drehbare Führungsrolle (152) vorhanden ist, die an der Stirnaußenseite der Versatzformrolle (140) anliegt.

6. Vorrichtung nach einem oder mehreren der Ansprüche 1 bis 5,
- **dadurch gekennzeichnet, dass**
- die zweite Führungsandruckrolle (130) eine Zentralausnehmung (162) mit einem Durchmesser (D10) aufweist, durch die hindurch ein angetriebener zweiter Drehlagerzapfen (134) zum Antreiben der zweiten Führungsandruckrolle (130) geführt ist, wobei der zweite Drehlagerzapfen (134) eine Drehachse (32) bildet, und die Versatzformrolle eine Zentralausnehmung (144) mit einem Durchmesser (D2) aufweist, der größer ist als der Durchmesser (D10) der Zentralausnehmung (132) der Versatzformrolle (140) und der Versatzformrolle (140) je nach gewähltem Versatzmaß (V) exzentrisch zur zweiten Führungsandruckrolle (130) beziehungsweise deren Drehachse (132) angeordnet ist.

7. Vorrichtung nach einem oder mehreren der Ansprüche 1 bis 6,
- **dadurch gekennzeichnet, dass**
- die Stirnaußenumfangskontur der Versatzformrolle (140) eine Neigung aufweist und die Stirnaußenumfangskontur der Andruckrolle (150) eine entsprechende Gegenneigung aufweist.

8. Vorrichtung nach einem oder mehreren der Ansprüche 1 bis 7,
- **dadurch gekennzeichnet, dass**
- eine Spanneinheit (170) vorhanden ist, die drückend auf die Andruckrollen (150) einwirkt.

9. Vorrichtung nach einem oder mehreren der Ansprüche 1 bis 8,
- **dadurch gekennzeichnet, dass**
- die beiden Andruckrollen (150) in einem Umfangswinkel von 90° versetzt an der Stirnaußenumfangskontur der Versatzformrolle (140) angeordnet sind.

## Claims

1. Device for producing a cylindrical container (10) with a large diameter (14), in particular a silo, from a sheet-metal strip (20) which is wound up on a reel (18) and is subsequently bent helically, with
- a profiling device (30) which can be erected on the ground with profiling stations (32), the profiling device (30) having a path which is formed in a manner corresponding to the wall bend of the cylindrical containing (10) and runs in an offset manner and to which the sheet-metal strip (20) is supplied, and the profiling station (32, 32.1) forms a protruding flange (28) on the upper border region (22) of the supplied sheet-metal strip (20) and an overlapping wall region (44) which downwardly adjoins the flange (28) and runs offset with respect to the sheet-metal plane (E) with an offset (V),
- a rotary drive device (50) which can be erected on the ground with rotary drive stations (52),
- a welding device (60) which is arranged directly downstream of or on the rotary drive device (50) for welding an overlappingly adjacent upper border region to a lower border region (24, 22) of the associated lower and upper sheet-metal strip (20.1, 20.2),
- an annular mounting frame (34) which can be erected on the ground and, at a distance from its lower end, comprising supporting rollers (38), which are spaced apart in the circumferential direction along a helical line, on supports (36) for supporting the container (10) on the protruding flange (28), wherein the path of the profiling device (30) runs next to the path of the helical line determined by the supporting rollers (36), and wherein the arrangement of the rotary drive device (50) with its rotary stations (52) and the welding device (60) coincides with the helical line-shaped path determined by the supporting rollers (38),
- **characterized in that**
- in order to form the offset overlapping wall region (44), a profiling station (32.1) has means for variably adjusting the respectively required offset (V) to be moulded into the sheet-metal strip (20), wherein
- the profiling station (32.1) has the following components for forming the offset overlapping wall region (44):
- a guide press-on roller (112), which is drivable in a rotatable manner positionally fixed about a first axis of rotation (120), with a lower guide press-on roller region (116), the end wall of which lies on the outer side directly below the overlapping wall region (44)/offset region of the sheet-metal strip (20), and with an upper guide roller region (114), the diameter (D2) of which is smaller than the diameter (D1) of the lower guide press-on roller region (116),
- a second guide press-on roller (130), which is driven in a rotatable manner positionally fixed about a second axis of rotation and the end side of which lies on the outer side against the sheet-metal strip (20) on the opposite side of the lower guide press-on roller region (116) of the first guide press-on roller (112),
- a non-driven offset moulding roller (140) mounted in a floating manner rotatably on the second guide press-on roller (130),
- at least one, in particular two rotatable press-on rollers (150) which can be positioned in a variable manner in a direction perpendicular to the sheet-metal strip plane E, act on the offset moulding roller (140), which is mounted in a floating manner, and therefore in each case define the rotational position of the axis of rotation (142) of said offset moulding roller (140) in order to adjust the offset (V).

2. Device according to Claim 1,
- **characterized in that**
- a plurality of profiling stations (32) arranged one behind another in the circumferential direction are arranged for the step-by-step plastic moulding of the protruding flange (28) onto the upper border region (22) of the sheet-metal strip (20), and the profiling station (32.1) for deforming the offset overlapping wall region (44) is the final station in the circumferential direction.

3. Device according to Claim 1,
- **characterized in that**
- an annular bearing disc (160) is arranged between the second guide press-on roller (130) and the offset moulding roller (140).

4. Device according to Claim 3,
- **characterized in that**
- the annular bearing disc is composed of brass.

5. Device according to one or more of Claims 1 to 4,
- **characterized in that**
- there is at least one further rotatable guide roller (152) which lies against the end outer side of the offset moulding roller (140).

6. Device according to one or more of Claims 1 to 5,
- **characterized in that**
- the second guide press-on roller (130) has a central recess (162) with a diameter (D10), through which a driven second rotary bearing pin (134) for driving the second guide press-on roller (130) is guided, wherein the second rotary bearing pin (134) forms an axis of rotation (32), and the offset moulding roller has a central recess (144) with a diameter (D2) which is larger than the diameter (D10) of the central recess (132) of the offset moulding roller (140), and, depending on the offset (V) selected, the offset moulding roller (140) is arranged eccentrically with respect to the second guide press-on roller (130) or to the axis of rotation (132) thereof.

7. Device according to one or more of Claims 1 to 6,
- **characterized in that**
- the end outer circumferential contour of the offset moulding roller (140) has an inclination, and the end outer circumferential contour of the press-on roller (150) has a corresponding mating inclination.

8. Device according to one or more of Claims 1 to 7,
- **characterized in that**
- there is a tensioning unit (170) which acts in a manner pressing against the press-on rollers (150).

9. Device according to one or more of Claims 1 to 8,
- **characterized in that**
- the two press-on rollers (150) are arranged offset at a circumferential angle of 90° on the end outer circumferential contour of the offset moulding roller (140).

## Revendications

1. Dispositif de fabrication d'un récipient cylindrique (10) de grand diamètre (14), en particulier d'un silo, à partir d'une bande de tôle (20) enroulée sur un dévidoir (18) puis courbée en hélice, le dispositif comprenant
- un moyen de profilage (30) pouvant être placé sur le sol, muni de stations de profilage (32) et comportant une voie dont la forme correspond à celle de la courbure de paroi du récipient cylindrique (10), qui s'étend de manière décalée et à laquelle est amenée la bande de tôle (20), la station de profilage (32, 32.1) formant au niveau de la région de bord supérieur (22) de la bande de tôle amenée (20) une bride en porte-à-faux (28) et une région de paroi de chevauchement (44) s'étendant de manière décalée par rapport au plan de la bande de tôle (E) avec un décalage (V) et se raccordant vers le bas à la bride (28),
- un moyen d'entraînement en rotation (50) qui peut être placé sur le sol et qui comprend des stations d'entraînement en rotation (52),
- un moyen de soudage (60) qui est disposé immédiatement en aval ou au niveau du moyen d'entraînement en rotation (50) pour souder une bande de tôle supérieure adjacente à chevauchement à une région de bord inférieure (24, 22) de la bande de tôle supérieure et inférieure associée (20.1, 20.2),
- un cadre de montage annulaire (34) pouvant être placé sur le sol et se trouvant à distance de rouleaux de support (38), espacés de son extrémité inférieure le long d'une ligne hélicoïdale dans la direction circonférentielle, sur des consoles de support (36) destinées à supporter le récipient (10) au niveau de la bride en porte-à-faux (28), la voie du moyen de profilage (30) s'étendant à proximité de la voie de la ligne hélicoïdale définie par les rouleaux de support (36) et l'agencement du moyen d'entraînement en rotation (50) coïncidant avec ses stations de rotation (52) et celui du moyen de soudage (60) coïncidant avec la voie en forme d'hélice définie par les rouleaux de support (38),
- **caractérisé en ce que**
- une station de profilage (32.1) comporte des moyens de réglage variable du décalage nécessaire (V) à former dans la bande de tôle (20) pour former la région de paroi de chevauchement décalée (44),
- la station de profilage (32.1) comporte les composants suivants pour former la région de paroi de chevauchement décalée (44) :
- un rouleau de pressage et de guidage (112) pouvant être entraîné en rotation de manière fixe autour d'un premier axe de rotation (120) et comportant une région de rouleau de pressage et de guidage inférieure (116), dont la paroi d'extrémité est en appui du côté extérieur immédiatement au-dessous de la région de la paroi de chevauchement (44)/région de décalage de la bande de tôle (20), et une région de rouleau de guidage supérieure (114) dont le diamètre (D2) est inférieur au diamètre (D1) de la région de rouleau de pressage et de guidage inférieure (116),
- un deuxième rouleau de pressage et de guidage (130) qui peut être entraîné en rotation de manière fixe autour d'un deuxième axe de rotation et dont le côté d'extrémité est en appui du côté extérieur sur la bande de tôle (20) du côté opposé de la région de rouleau de pressage et de guidage inférieure (116) du premier rouleau de pressage et de guidage (112),
- un rouleau de formation de décalage non entraîné (140) monté à rotation de manière flottante sur le deuxième rouleau de pressage et de guidage (130),
- au moins un rouleau, en particulier deux rouleaux, de pressage rotatifs (150) qui peuvent être positionnés de manière variable dans une direction perpendiculaire au plan E de la bande de tôle, qui agissent sur le rouleau de formation de décalage (140) monté de manière flottante et qui définissent donc la position en rotation de l'axe de rotation (142) de celui-ci pour régler le décalage (V).

2. Dispositif selon la revendication 1,
- **caractérisé en ce que**
- une pluralité de stations de profilage (32), placées les unes derrière les autres dans la direction circonférentielle, sont disposées au niveau de la région de bord supérieure (22) de la bande de tôle (20) pour effectuer le formage plastique progressif de la bride en porte-à-faux (28) et la station de profilage (32.1) destinée à déformer la région de paroi de chevauchement décalée (44) est la dernière station dans la direction circonférentielle.

3. Dispositif selon la revendication 1,
- **caractérisé en ce que**
- un disque formant palier annulaire (160) est disposé entre le deuxième rouleau de pressage et de guidage (130) et le rouleau de formation de décalage (140).

4. Dispositif selon la revendication 3,
- **caractérisé en ce que**
- le disque formant palier annulaire en laiton.

5. Dispositif selon l'une ou plusieurs des revendications 1 à 4,
- **caractérisé en ce que**
au moins un autre rouleau de guidage rotatif (152) est présent qui est en appui sur le côté extérieur avant du rouleau de formation de décalage (140).

6. Dispositif selon l'une ou plusieurs des revendications 1 à 5,
- **caractérisé en ce que**
- le deuxième rouleau de pressage et de guidage (130) comporte un évidement central (162) de diamètre (D10) à travers lequel un deuxième pivot de palier rotatif (134) est guidé pour entraîner le deuxième rouleau de pressage et de guidage (130), le deuxième pivot de palier rotatif (134) formant un axe de rotation (32), et le rouleau de formation de décalage comporte un évidement central (144) de diamètre (D2) supérieur au diamètre (D10) de l'évidement central (132) du rouleau de formation de décalage (140) et le rouleau de formation de décalage (140) est disposé excentriquement, d'un décalage choisi (V), par rapport au deuxième rouleau de pressage et de guidage (130) ou à son axe de rotation (132).

7. Dispositif selon l'une ou plusieurs des revendications 1 à 6,
- **caractérisé en ce que**
- le contour périphérique extérieur d'extrémité du rouleau de formation de décalage (140) présente une inclinaison et le contour périphérique extérieur d'extrémité du rouleau de pressage (150) présente une inclinaison homologue correspondante.

8. Dispositif selon l'une ou plusieurs des revendications 1 à 7,
- **caractérisé en ce que**
- une unité de serrage (170) est présente qui agit par pression sur les rouleaux de pressage (150).

9. Dispositif selon l'une ou plusieurs des revendications 1 à 8,
- **caractérisé en ce que**
- les deux rouleaux de pressage (150) sont disposés sur le contour périphérique extérieur d'extrémité des rouleaux de formation de décalage (140) suivant un angle périphérique de 90°.
